# EUROPÄISCHE PATENTSCHRIFT

(11) **EP 3 534 594 B1**
(45) Veröffentlichungstag und Bekanntmachung des Hinweises auf die Patenterteilung: **25.11.2020**
(21) Anmeldenummer: 19155730.5
(22) Anmeldetag: 06.02.2019
(51) Int. Cl.: H04L 29/08

(54) **KOMMUNIKATIONSSYSTEM ZUR DATENÜBERMITTLUNG ZWISCHEN DATENERZEUGEREINHEITEN UND DATENAUSWERTEEINHEITEN**
COMMUNICATION SYSTEM FOR TRANSMITTING DATA BETWEEN DATA SOURCES AND DATA EVALUATORS
SYSTÈME DE COMMUNICATION POUR LA TRANSMISSION DE DONNÉES ENTRE DES SOURCES DE DONNÉES ET DES ÉVALUATEURS DE DONNÉES

(30) Priorität: 28.02.2018 EP 18159230
(43) Veröffentlichungstag der Anmeldung: 04.09.2019
(73) Patentinhaber: Kistler Holding AG, 8408 Winterthur (CH)
(72) Erfinder: Angliker, Marco, 8032 Zürich (CH); Müller, David, 8340 Hinwil (CH); Rösch, Martin, 9000 St. Gallen (CH); Schaad, Marc, 5035 Unterentfelden (CH)

(56) Entgegenhaltungen:
- EP-A1- 1 681 834
- EP-A1- 2 958 398
- EP-A2- 2 911 410

## Beschreibung

### Technisches Gebiet

Die Erfindung betrifft gemäss dem Oberbegriff des unabhängigen Anspruchs ein Kommunikationssystem zur Datenübermittlung zwischen einer Datenerzeugereinheit und einer räumlich entfernten Datenauswerteeinheit, welche Datenerzeugereinheit Daten erzeugt, welches Kommunikationssystem von der Datenerzeugereinheit erzeugte Daten übermittelt und welche Datenauswerteeinheit vom Kommunikationssystem übermittelte Daten auswertet.

### Stand der Technik

Das Internet der Dinge bezeichnet die Kommunikation zwischen beliebigen physischen Objekten über ein nicht-proprietäres Netzwerk wie dem Internet. Die Kommunikation umfasst auch eine Datenübermittlung.

Die Schrift WO15155284A1 beschreibt hierzu eine Datenübermittlung zwischen einem Industriestandort und einer räumlich entfernten Kommunikationseinheit. Am Industriestandort befindet sich eine Datenerzeugereinheit. Ein Kommunikationssystem weist eine hardwarenahe Schnittstelle zur Datenübermittlung von der Datenerzeugereinheit sowie eine webfähige Schnittstelle zur Datenübermittlung zur Kommunikationseinheit auf. Die Datenübermittlung zwischen der hardwarenahen Schnittstelle und der Datenerzeugereinheit erfolgt über ein hardwarenahes Protokoll, welches hardwarenahe Protokoll gemäss Open Systems Interconnection (OSI) Modell bloss die untersten fünf Schichten Bitübertragungsschicht, Sicherungsschicht, Vermittlungsschicht, Transportschicht und Sitzungsschicht nutzt. Von der Datenerzeugereinheit an die hardwarenahe Schnittstelle übermittelte Daten werden in einem Datenspeicherbereich vom Kommunikationssystem abgelegt. Die Datenübermittlung zwischen der webfähigen Schnittstelle und der Kommunikationseinheit erfolgt über ein webfähiges Protokoll, welches webfähige Protokoll alle sieben Schichten des OSI Modells nutzt.

Die Schrift EP2911410A2 offenbart ein Kommunikationssystem zur Übermittlung von Sensordaten zwischen einem Sensor oder mehreren Sensoren und mindestens einer Empfangseinheit. Der Sensor oder die Sensoren sind in selbstfahrenden Kraftfahrzeugen angeordnet. Die Sensordaten werden über ein bekanntes Netzwerk zur Kommunikation wie ein Local Area Network, ein Wide Area Network, usw. übermittelt. Dabei können die Daten entweder in Echtzeit übermittelt werden und/oder vor der Übermittlung zwischengespeichert und als Stapel übermittelt werden. Die Empfangseinheit wertet die übermittelten Daten aus und stellt die ausgewerteten Daten auf einer Weltkarte dar.

Nun sind die physischen Objekte im Internet der Dinge sehr vielfältig. So arbeiten Datenerzeugereinheiten nach ganz verschiedenen Prinzipien und übermitteln die Daten über unterschiedlich gestaltete hardwarenahe Schnittstellen. Eine grosse Flexibilität bezüglich einer Vielzahl von verschiedenen Datenerzeugereinheiten und unterschiedlichen Schnittstellen ist von Bedeutung.

Diesbezüglich offenbart die Schrift WO2003045639A2 einen Roboter mit einer Robotersoftware. Die Robotersoftware weist eine Dreischichtenarchitektur auf. Eine unterste Schicht ist ein Betriebssystem für Roboterhardware, darüber befindet sich eine Hardwareabstraktionsschicht (HAL) und auf dieser sitzt eine Robotersteuerungssoftware. Die HAL trennt das Betriebssystem für Roboterhardware von der Robotersteuerungssoftware, nur die HAL greift auf das Betriebssystem für Roboterhardware zu. Die HAL vermittelt Daten zwischen dem Betriebssystem für Roboterhardware und der Robotersteuerungssoftware. Dazu weist die HAL Software zur Kommunikation mit dem Betriebssystem für Roboterhardware und Software zur Kommunikation mit der Robotersteuerungssoftware auf. Somit kann zwischen einer Vielzahl von unterschiedlichen Roboterhardware und der Robotersteuerungssoftware flexibel kommuniziert werden, ohne dass die Robotersteuerungssoftware selber dafür angepasst werden muss, denn es genügt in der HAL entsprechende Software zur Kommunikation mit dem Betriebssystem von unterschiedlicher Roboterhardware bereitzustellen.

Auch ist es wünschenswert, die Kommunikation im Internet der Dinge mit hoher Robustheit gegen nicht vorhersehbare Einflüsse zu realisieren. Die Kommunikation ist nicht vorhersehbaren Einflüssen wie Netzwerkangriffen, Netzwerkausfällen, usw. ausgesetzt. Die Kommunikation soll sich einer Verfügbarkeit des Netzwerkes flexibel anpassen können.

Zudem ist es ein allgemeiner Wunsch, die Kommunikation im Internet der Dinge mit hoher Bedienfreundlichkeit zu bewerkstelligen. Das bedeutet, dass eine räumlich entfernte Datenauswerteeinheit, welche Datenauswerteeinheit von einem Kommunikationssystem übermittelte Daten auswertet, auch für eine Vielzahl von unterschiedlichen Datenerzeugereinheiten konsistent bedienbar sein soll. Hierbei sollen eine Darstellungsschicht und eine Anwendungsschicht der Datenauswerteeinheit gleichen Messparadigmen folgen und dieselben Grundfunktionen aufweisen.

Aufgabe der vorliegenden Erfindung ist es, die Datenübermittlung zwischen einer Datenerzeugereinheit und einer räumlich entfernten Datenauswerteeinheit mit hoher Robustheit gegen nicht vorhersehbare Einflüsse und Konsistenz bei der Bedienbarkeit der Datenauswerteeinheit zu gestalten.

### Darstellung der Erfindung

Diese Aufgabe wird durch die Merkmale des unabhängigen Anspruchs gelöst.

Die Erfindung betrifft ein Kommunikationssystem zur Datenübermittlung von Daten zwischen einer Vielzahl von Datenerzeugereinheiten und einer Vielzahl von räumlich entfernten Datenauswerteeinheiten, welche Datenerzeugereinheiten Daten erzeugen, welches Kommunikationssystem von den Datenerzeugereinheiten erzeugte Daten über ein nicht-proprietären Netzwerk übermittelt, und welche Datenauswerteeinheiten vom Kommunikationssystem übermittelte Daten auswerten; welches Kommunikationssystem eine Hardwareabstraktionsschicht aufweist; welche Hardwareabstraktionsschicht eine Datenauswerteeinheit als Ressource darstellt; welche Ressource eine Eigenschaft "Übermittlungsart von Daten" hat, welche Eigenschaft "Übermittlungsart von Daten" "Streaming" oder "Bulk Upload" oder "Streaming, Bulk Upload" lautet; welches Kommunikationssystem die Eigenschaft "Übermittlungsart von Daten" liest; und dass das Kommunikationssystem die erzeugten Daten gemäss der gelesenen Eigenschaft "Übermittlungsart von Daten" an die Datenauswerteeinheit übermittelt.

Das erfindungsgemässe Kommunikationssystem weist eine Hardwareabstraktionsschicht auf, in welcher Hardwareabstraktionsschicht die gemäss einem Messparadigma einer Datenauswerteeinheit geforderte Übermittlungsart von Daten als Eigenschaft "Übermittlungsart von Daten" einer Ressource dieser Datenauswerteeinheit darstellbar ist. Vorzugsweise wird die von dieser Datenauswerteeinheit geforderte Übermittlungsart von Daten vor der Datenübermittlung durch das Kommunikationssystem als Eigenschaft "Übermittlungsart von Daten" gespeichert, wobei die Eigenschaft "Übermittlungsart von Daten" "Streaming" oder "Bulk Upload" oder "Streaming, Bulk Upload" lautet. Beim Streaming erfolgt die Datenübermittlung in Echtzeit, während beim Bulk Upload die Datenübermittlung nicht in Echtzeit erfolgt. So kann die Datenübermittlung einer Verfügbarkeit des Netzwerkes situativ angepasst werden. Auch kann die Datenübermittlung so den Messparadigmen einer Darstellungsschicht und einer Anwendungsschicht einer Datenauswerteeinheit angepasst werden. Wenn eine Datenauswerteeinheit eine Datenübermittlung in Echtzeit fordert, kann das so gezielt in der Eigenschaft "Übermittlungsart von Daten" festgelegt werden. Dies gewährleistet eine Robustheit gegen nicht vorhersehbare Einflüsse und eine Konsistenz bei der Bedienbarkeit der Datenauswerteeinheit.

### Kurze Beschreibung der Zeichnungen

Im Folgenden wird die Erfindung beispielhaft unter Beizug der Figuren näher erklärt. Es zeigen
- Fig. 1: ein Blockdiagramm von Komponenten des Kommunikationssystems;
- Fig. 2: ein Blockdiagramm einer Softwarearchitektur des Kommunikationssystems nach Fig. 1; und
- Fig. 3: ein Blockdiagramm einer Hardwareabstraktionsschicht der Softwarearchitektur nach Fig. 2.

### Wege zur Ausführung der Erfindung

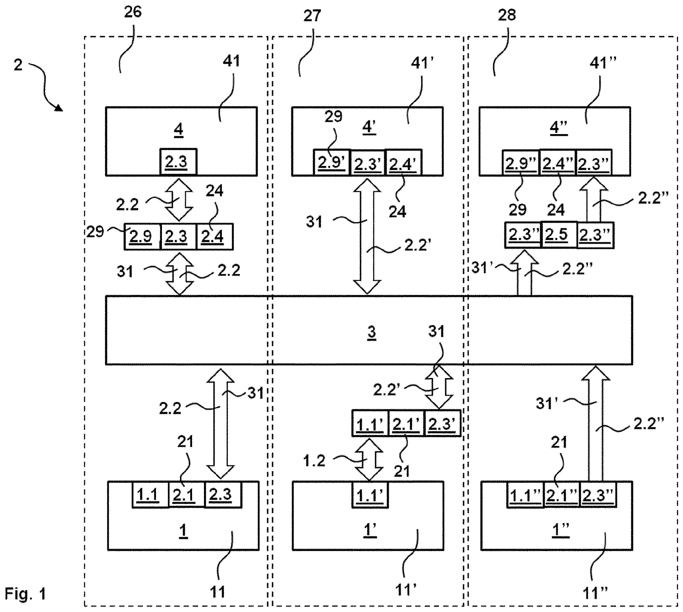

Fig. 1 zeigt ein Blockdiagramm von Komponenten des Kommunikationssystems 2. Die Komponenten bestehen aus einer Vielzahl von unterschiedlichen Datenerzeugereinheiten 1, 1', 1", aus mindestens einem nicht-proprietären Netzwerk 3 und aus einer Vielzahl von unterschiedlichen Datenauswerteeinheiten 4, 4', 4". Die Komponenten kommunizieren unidirektional oder bidirektional miteinander. Unidirektionale Kommunikation wird durch Einfachpfeile dargestellt, bidirektionale Kommunikation wird durch Doppelpfeile dargestellt. Kommunikation im Sinne der Erfindung umfasst sowohl eine Statusermittlung zwischen den Komponenten als auch die Datenübertragung zwischen den Komponenten.

Die Datenerzeugereinheiten 1, 1',1" umfassen Aufnehmer, welche Aufnehmer Messgrössen erfassen und für erfasste Messgrössen Daten erzeugen. Die Messgrössen können physikalische Messgrössen wie eine Kraft, ein Druck, eine Beschleunigung, eine Temperatur, ein Winkel, usw. sein. Für erfasste Messgrössen erzeugen die Aufnehmer erzeugen aktiv oder passiv Daten. Die Datenerzeugereinheiten 1, 1',1" stellen die erzeugten Daten nichtaufbereitet oder aufbereitet bereit.

So erfasst eine erste Datenerzeugereinheit 1 in der Ausführungsform eines Temperaturaufnehmers eine Temperatur als elektrische Spannungen und stellt erfasste elektrische Spannungen als nicht aufbereitete Daten bereit. Ein Beispiel für eine solche erste Datenerzeugereinheit 1 ist ein NiCr-Ni-Thermoelement (Typ K).

Eine zweite Datenerzeugereinheit 1' in der Ausführungsform eines piezoelektrischen Druckaufnehmers erfasst einen Druck als elektrische Ladungen. Ein elektrischer Ladungsverstärker verstärkt die erfassten elektrischen Ladungen elektrisch und digitalisiert verstärkte elektrische Ladungen zu digitalisierten Signalen und stellt die digitalisierten Signale als aufbereitete Daten bereit. Ein Beispiel für eine solche zweite Datenerzeugereinheit 1' ist ein piezoelektrischer Druckaufnehmer vom Typ 6052C gemäss Datenblatt 6052C_000-552d-12.15 der Patentanmelderin in Verbindung mit einem elektrischen Ladungsverstärker vom Typ 5064C gemäss Datenblatt 2854A_000-409-06.14 der Patentanmelderin.

Und eine dritte Datenerzeugereinheit 1" in der Ausführungsform eines Hall-Effekt-Aufnehmers erfasst einen Kurbelwinkel als elektrische Spannungen. Ein Komparator digitalisiert die erfassten elektrischen Spannungen zu digitalisierten Signalen und stellt die digitalisierten Signale als aufbereitete Daten bereit. Ein Beispiel für eine solche dritte Datenerzeugereinheit 1" ist ein Kurbelwinkelaufnehmer vom Typ 2619A11 in Verbindung mit einem Mess- und Auswertesystem für die Indizierung von Brennkraftmaschinen vom Typ 2893A gemäss Datenblatt 2893A_000-724d-01.17 der Patentanmelderin.

Das nicht-proprietäre Netzwerk 3 ist ein allgemein zugängliches Netzwerk zur Kommunikation wie das World Wide Web (WWW).

Die Datenauswerteeinheiten 4, 4', 4" sind räumlich entfernt von den Datenerzeugereinheiten 1, 1',1" angeordnet. Räumlich entfernt im Sinne der Erfindung bezeichnet eine kürzeste Entfernung von mehr als 30 Metern.

Die Datenauswerteeinheiten 4, 4', 4" werten übermittelte Daten aus und stellen übermittelte und ausgewertete Daten dar. Dazu weist jede Datenauswerteeinheit 4, 4', 4" eine Recheneinheit mit einem Rechenprozessor, mit einem physikalischen Datenspeicher und mit einem Bildschirm auf. Der Rechenprozessor kann eine Central Processing Unit (CPU), usw. sein. Der physikalische Datenspeicher kann ein FLASH Memory, eine Hard Disk (HD), eine Solid-State Disk (SSD), usw. sein.

Das Kommunikationssystem 2 ist räumlich dezentral angeordnet. Weitere Komponenten des Kommunikationssystems 2 bestehen aus einer Vielzahl von hardwarenahen Schnittstellen 1.1, 1.1', 1.1", aus einer Vielzahl von webfähigen Schnittstellen 2.3, 2.3', 2.3', aus einer Vielzahl von Clienteinheiten 2.1, 2.1', 2.1", aus einer Vielzahl von Clustereinheiten 2.4, 2.4', 2.4", aus mindestens einer Datenspeichereinheit 2.5 und aus einer Vielzahl von Programmierschnittstelleneinheiten 2.9, 2.9', 2.9".

Das Kommunikationssystem 2 hat Zugriff auf die hardwarenahen Schnittstellen 1.1, 1.1', 1.1". Die hardwarenahe Schnittstelle 1.1, 1.1', 1.1" ist eine physikalische Schnittstelle wie Bayonet Neill Concelman (BNC), D-Subminiature (D-Sub), Recommended Standard 232 (RS 232), usw.

Jede Datenerzeugereinheit 1, 1', 1" weist eine hardwarenahe Schnittstelle 1.1, 1.1', 1.1" auf. Die hardwarenahe Schnittstelle 1.1, 1.1', 1.1" ist in einem Gehäuse der Datenerzeugereinheit 1, 1', 1" angeordnet. Eine Clienteinheit 2.1, 2.1', 2.1" kann eine hardwarenahe Schnittstelle 1.1, 1.1', 1.1" aufweisen. Eine hardwarenahe Schnittstelle 1.1, 1.1', 1.1" ist dann in einem Gehäuse der Clienteinheit 2.1, 2.1', 2.1" angeordnet. Gemäss Fig. 1 weist ein Gehäuse einer ersten Datenerzeugereinheit 1 eine erste hardwarenahe Schnittstelle 1.1 auf. Gemäss Fig. 1 weist ein Gehäuse einer dritten Datenerzeugereinheit 1" eine dritte hardwarenahe Schnittstelle 1.1" auf. Gemäss Fig. 1 weist ein Gehäuse einer zweiten Clienteinheit 2.1' eine zweite hardwarenahe Schnittstelle 1.1' auf.

Das Kommunikationssystem 2 hat Zugriff auf die webfähigen Schnittstellen 2.3, 2.3', 2.3". Eine webfähige Schnittstelle 2.3, 2.3', 2.3" ist eine physikalische Schnittstelle wie Registered Jack 45 (RJ 45), Institute of Electrical and Electronics Engineers 802.11 (IEEE 802.11), usw.

Jede Datenauswerteeinheit 4, 4', 4" weist eine webfähige Schnittstelle 2.3, 2.3', 2.3" auf. Die webfähige Schnittstelle 2.3, 2.3', 2.3" ist in einem Gehäuse der Datenauswerteeinheit 4, 4', 4" angeordnet. Eine Datenerzeugereinheit 1, 1', 1" oder eine Clienteinheit 2.1, 2.1' 2.1" oder eine Clustereinheit 2.4, 2.4', 2.4" oder eine Datenspeichereinheit 2.5 kann eine webfähige Schnittstelle 2.3, 2.3', 2.3" aufweisen. Eine webfähige Schnittstelle 2.3, 2.3', 2.3" ist dann in einem Gehäuse einer Datenerzeugereinheit 1, 1', 1" oder in einem Gehäuse einer Clienteinheit 2.1, 2.1', 2.1" oder in einem Gehäuse einer Clustereinheit 2.4, 2.4', 2.4" oder in einem Gehäuse einer Datenspeichereinheit 2.5 angeordnet. Gemäss Fig. 1 weist ein Gehäuse einer ersten Datenerzeugereinheit 1 eine erste webfähige Schnittstelle 2.3 auf. Gemäss Fig. 1 weist ein Gehäuse einer dritten Datenerzeugereinheit 1" eine dritte webfähige Schnittstelle 2.3" auf. Gemäss Fig. 1 weist ein Gehäuse einer zweiten Clienteinheit 2.1' eine zweite webfähige Schnittstelle 2.3' auf. Gemäss Fig. 1 weist ein Gehäuse einer ersten Clustereinheit 2.4 eine erste webfähige Schnittstelle 2.3 auf. Gemäss fig. 1 weist ein Gehäuse einer Datenspeichereinheit 2.5 eine dritte webfähige Schnittstelle 2.3" auf.

Die Datenspeichereinheit 2.5 ist ein physikalischer Datenspeicher wie ein FLASH Memory, eine Hard Disk (HD), eine Solid-State Disk (SSD), usw.

Gemäss Fig. 1 kommuniziert die zweite hardwarenahe Schnittstelle 1.1' der zweiten Clienteinheit 2.1' über einen hardwarenahen Kommunikationskanal 1.2 mit der zweiten Datenerzeugereinheit 1'. Der zweite hardwarenahe Kommunikationskanal 1.2' ist ein physikalischer Kanal und kann über ein drahtgebundenes oder optisches Medium realisiert sein, aber ebenso auch über eine Funkstrecke.

Die webfähigen Schnittstellen 2.3, 2.3', 2.3" kommunizieren über webfähige Kommunikationskanäle 2.2, 2.2', 2.2" mit dem nicht-proprietären Netzwerk 3. Die webfähigen Kommunikationskanäle 2.2, 2.2', 2.2" sind physikalische Kanäle und können über drahtgebundene oder optische Medien realisiert sein, aber ebenso auch über Funkstrecken.

Das Kommunikationssystem 2 hat eine Client-Cluster Struktur wie Apache Active MQ, Apache Kafka, usw. Mindestens eine Clienteinheit 2.1, 2.1', 2.1" ist räumlich nahe mindestens einer Datenerzeugereinheit 1, 1',1" angeordnet. Mindestens eine Clustereinheit 2.4, 2.4', 2.4" hingegen ist räumlich beliebig nahe oder beliebig entfernt von mindestens einer Datenauswerteeinheit 4, 4', 4" angeordnet. Räumlich nahe im Sinne der Erfindung bezeichnet eine Anordnung in einem gleichen Subnetzwerk hinter einem Router, wobei Adressen von Datenerzeugereinheiten 1, 1',1" und Clienteinheiten 2.1, 2.1', 2.1" in einem gleichen Subnetzwerk für Dritte ausserhalb dieses Subnetzwerkes nicht sichtbar sind.

Jede Clienteinheit 2.1, 2.1', 2.1" und jede Clustereinheit 2.4, 2.4', 2.4" weist eine Recheneinheit mit einem Rechenprozessor und mit einem physikalischen Datenspeicher auf. Der Rechenprozessor kann eine Central Processing Unit (CPU), usw. sein. Der physikalische Datenspeicher kann ein FLASH Memory, eine Hard Disk (HD), eine Solid-State Disk (SSD), usw. sein.

Eine Datenerzeugereinheit 1, 1',1" kann eine Clienteinheit 2.1, 2.1' 2.1" aufweisen. Eine Clienteinheit 2.1, 2.1' 2.1" ist dann in einem Gehäuse einer Datenerzeugereinheit 1, 1',1" angeordnet. Eine Clienteinheit 2.1, 2.1', 2.1" kann aber auch ein eigenes Gehäuse aufweisen. Gemäss Fig. 1 weist ein Gehäuse einer ersten Datenerzeugereinheit 1 eine erste Clienteinheit 2.1 auf. Gemäss Fig. 1 weist eine zweite Clienteinheit 2.1' ein eigenes Gehäuse auf. Gemäss Fig. 1 weist ein Gehäuse einer dritten Datenerzeugereinheit 1" eine dritte Clienteinheit 2.1" auf.

Eine Datenauswerteeinheit 4, 4', 4" kann eine Clustereinheit 2.4, 2.4', 2.4" aufweisen. Eine Clustereinheit 2.4, 2.4', 2.4" ist dann in einem Gehäuse einer Datenauswerteeinheit 4, 4', 4" angeordnet. Eine Clustereinheit 2.4, 2.4', 2.4" kann aber auch ein eigenes Gehäuse aufweisen. Gemäss Fig. 1 weist eine erste Clustereinheit 2.4 ein eigenes Gehäuse auf. Gemäss Fig. 1 weist ein Gehäuse einer zweiten Datenauswerteeinheit 4' eine zweite Clustereinheit 2.4' auf. Gemäss Fig. 1 weist ein Gehäuse einer dritten Datenauswerteeinheit 4" eine dritte Clustereinheit 2.4" auf.

Eine Datenauswerteeinheit 4, 4', 4" kann eine Programmierschnittstelleneinheit 2.9, 2.9', 2.9" aufweisen. Eine Programmierschnittstelleneinheit 2.9, 2.9', 2.9" ist dann in einem Gehäuse einer Datenauswerteeinheit 4, 4', 4" angeordnet. Eine Programmierschnittstelleneinheit 2.9, 2.9', 2.9" kann aber auch im Gehäuse einer Clustereinheit 2.4, 2.4', 2.4" angeordnet sein. Gemäss Fig. 1 weist eine erste Clustereinheit 2.4 ein eigenes Gehäuse mit einer ersten Programmierschnittstelleneinheit 2.9 auf. Gemäss Fig. 1 weist ein Gehäuse einer zweiten Datenauswerteeinheit 4' eine zweite Programmierschnittstelleneinheit 2.9' auf. Gemäss Fig. 1 weist ein Gehäuse einer dritten Datenauswerteeinheit 4" eine dritte Programmierschnittstelleneinheit 2.9" auf.

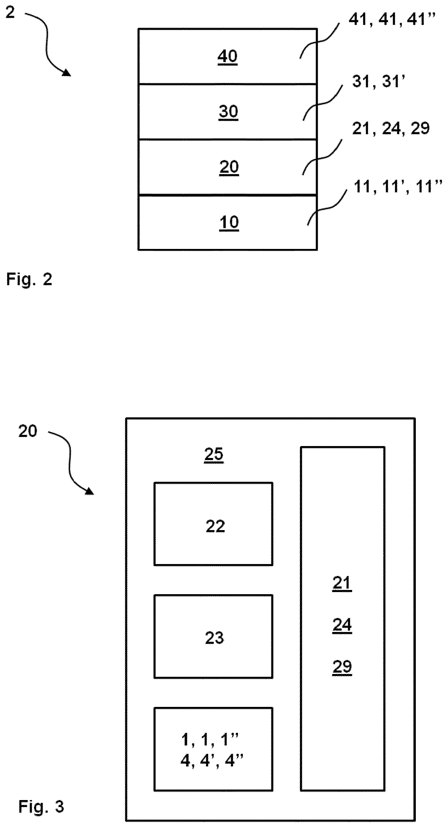

Fig. 2 zeigt ein Blockdiagramm der Softwarearchitektur des Kommunikationssystems 2. Die Softwarearchitektur weist eine unterste Hardwareschicht 10, eine zweitunterste Hardwareabstraktionsschicht 20, eine zweitoberste Kommunikationsschicht 30 und eine oberste Anwendungsschicht 40 auf.

In der Hardwareschicht 10 erfolgt eine Datenerzeugung über eine Vielzahl von unterschiedlichen Hardwaretreibern 11, 11', 11'' der Datenerzeugereinheiten 1, 1', 1''. Die Hardwaretreiber 11, 11', 11" betreiben die Datenerzeugereinheiten 1, 1', 1".

Die Hardwareabstraktionsschicht 20 weist mindestens ein Client Protokoll 21 und mindestens ein Cluster Protokoll 24 und mindestens eine Programmierschnittstelle 29 auf. Das Client Protokoll 21 ist in den Clienteinheiten 2.1, 2.1', 2.1" installiert, Das Cluster Protokoll 24 ist in den Clustereinheiten 2.4, 2.4', 2.4" installiert. Die Programmierschnittstelle 29 ist in den Programmierschnittstelleneinheiten 2.9, 2.9', 2.9" installiert.

Die Kommunikationsschicht 30 weist mindestens ein webfähiges Protokoll 31, 31' zur Kommunikation über das WWW auf. Das webfähige Protokoll 31, 31' ist ein Netzwerkprotokoll, das alle sieben Schichten des OSI Modells umfasst, wie die Familie der Transmission Control Protocols/Internet Protocols (TCP/IP), Hypertext Transfer Protocol (HTTP), JavaScript Object Notation (JSON), IoTivity, Constrained Application Protocol (CoAP), Universal Serial Bus (USB), usw.

Das Client Protokoll 21 und das Cluster Protokoll 24 kommunizieren miteinander über das webfähige Protokoll 31, 31'.

Die Anwendungsschicht 40 umfasst eine Vielzahl von unterschiedlichen Anwendungsprogrammen 41, 41', 41" der Datenauswerteeinheiten 4, 4', 4". Die Anwendungsprogramme 41, 41', 41" sind in den physikalischen Datenspeichern der Datenauswerteeinheiten 4, 4', 4" speicherbar und aus den physikalischen Datenspeichern in die Datenprozessoren der Datenauswerteeinheiten 4, 4', 4" ladbar. Die Anwendungsprogramme 41, 41', 41" sind unterschiedlich.

Ein erstes Anwendungsprogramm 41 in der Ausführungsform eines Auswerteprogramms wertet Daten von piezoelektrischen Sensoren aus. Dabei werden Daten von Messgrössen wie Kraft, Druck oder Beschleunigung an einem Messstand erfasst und vom und vom Kommunikationssystem an das Auswerteprogramm übermittelt.

Ein zweites Anwendungsprogramm 41' in der Ausführungsform eines Überwachungsprogramms überwacht einen Spritzgiessprozess in einer Spritzgiessmaschine. Dabei werden Daten von Messgrössen wie Temperatur und Druck in einer Kavität der Spritzgiessmaschine erfasst und vom und vom Kommunikationssystem 2 an das Überwachungsprogramm übermittelt.

Ein drittes Anwendungsprogramm 41" in der Ausführungsform eines Indizierungsprogramms wertet erfasste Daten einer Verbrennung von Kraftstoff und Luft in einer Brennkraftmaschine aus. Dabei werden Daten von Messgrössen wie Temperatur und Druck in einer Brennkammer der Brennkraftmaschine sowie Daten der Messgrösse Kurbelwinkel einer Kurbelwelle der Brennkraftmaschine erfasst und vom Kommunikationssystem 2 an das Indizierungsprogramm übermittelt.

Fig. 3 zeigt ein Blockdiagramm der Hardwareabstraktionsschicht 20 der Softwarearchitektur des Kommunikationssystems 2. Die Hardwareabstraktionsschicht 20 legt eine einheitliche Struktur und eine einheitliche Verhaltensweise für die Komponenten des Kommunikationssystems 2 fest. Vorzugsweise erfolgt dies nach dem Representational State Transfer (REST) Programmparadigma. Danach werden die Komponenten einheitlich identifiziert, ein Status der Komponenten wird einheitlich ermittelt, die Komponenten arbeiten einheitlich zusammen und auch die Datenübermittlung zwischen den Komponenten erfolgt mit einheitlicher Datensicherheit.

In der Hardwareabstraktionsschicht 20 erfolgt die Zusammenarbeit der Komponenten über ein semantisches Modell (Resource Model). Jede Komponente wird im semantischen Modell als Ressource 25 (Resource) dargestellt. So wird die erste Datenerzeugereinheit 1 im semantischen Modell als Ressource 25 "Temperaturaufnehmer" dargestellt. Die zweite Datenerzeugereinheit 1' wird als Ressource 25 "piezoelektrischer Druckaufnehmer" dargestellt. Die dritte Datenerzeugereinheit 1" wird als Ressource 25 "Hall-Effekt-Aufnehmer" dargestellt. Die erste Datenauswerteeinheit 4 wird im semantischen Modell als Ressource 25 "Auswerteprogramm" dargestellt. Die zweite Datenauswerteeinheit 4' wird im semantischen Modell als Ressource 25 "Überwachungsprogramm" dargestellt. Die dritte Datenauswerteeinheit 4" wird im semantischen Modell als Ressource 25 "Indizierungsprogramm" dargestellt. Diese Darstellungen gelten für alle Komponenten des Kommunikationssystems 2. Diese Darstellungen werden vom Kommunikationssystem 2 einheitlich verwendet.

In der Hardwareabstraktionsschicht 20 hat jede Ressource 25 eine Adresse 22 wie Uniform Resource Identifier (URI), Universally Unique Identifier (UUID), usw. Die Adresse 22 legt einen Namen einer Ressource 25 eineindeutig fest.

In der Hardwareabstraktionsschicht 20 erfolgt die Statusermittlung der Ressource über Statusoperationen (CRUDN) wie eine Ressource anlegen (Create), den Status einer Ressource anfragen (Retrieve), den Status einer Ressource aktualisieren (Update), eine Ressource entfernen (Delete) und eine Ressource benachrichtigen (Notify).

Im semantischen Modell hat jede Ressource mindestens eine Eigenschaft 23 (Property). Die Eigenschaft 23 gibt in einheitlicher Art und Weise Auskunft über die Komponente. Die Eigenschaft 23 wird vor der Datenübermittlung durch das Kommunikationssystem 2 in der Hardwareabstraktionsschicht 20 gespeichert. Die Eigenschaft 23 kann ein "Komponentenname" sein, so wie die Komponente vom Hersteller benannt worden ist. Die Eigenschaft 23 kann eine "Seriennummer" sein, so wie sie vom Hersteller der Komponente vergeben worden ist. Die Eigenschaft 23 kann ein "Ortsname" sein, an welchem Ort sich die Komponente befindet. Die Eigenschaft 23 kann ein "Protokollname" sein, mit welchem Protokoll die Komponente kommuniziert. Die Eigenschaft 23 kann eine "Funktion" sein, welche Funktion die Komponente ausführen kann. Die Eigenschaft 23 kann auch eine "Bezeichnung der Daten" sein, welche Daten erzeugt, oder übermittelt oder ausgewertet werden. Die Eigenschaft 23 kann auch ein "Format der Daten" sein, welche Daten erzeugt, oder übermittelt oder ausgewertet werden. Die Eigenschaft 23 kann eine "Übermittlungsart von Daten" sein, mit welcher Übermittlungsart Daten übermittelt werden. Die Eigenschaft 23 kann eine "Übermittlungsrate von Daten" sein, mit welcher Übermittlungsrate Daten übermittelt werden.

Das semantische Modell wird vom Kommunikationssystem 2 verwendet. So liest das Client Protokoll 21 die Adresse 22 der Ressource 25 einer Datenerzeugereinheit 1, 1', 1" ein, um die Datenerzeugereinheit 1, 1', 1" an der hardwarenahen Schnittstelle 1.1, 1.1', 1.1" eineindeutig mit einem Namen zu identifizieren. Und das Cluster Protokoll 24 liest die Adresse 22 der Ressource 25 einer Datenauswerteeinheit 4, 4', 4" ein, um die Datenauswerteeinheit 4, 4', 4" an der webfähigen Schnittstelle 2.3, 2.3', 2.3" eineindeutig mit einem Namen zu identifizieren. Auch verwenden das Client Protokoll 21 und das Cluster Protokoll 24 die Eigenschaften 23 der Ressourcen 25, um in einheitlicher Art und Weise über die Datenerzeugereinheiten 1, 1', 1" oder über die Datenauswerteeinheiten 4, 4', 4" Auskunft zu geben.

Die Programmierschnittstelle 29 verwendet eine Eigenschaft 23 einer Ressource 25, um von einer Datenerzeugereinheit 1, 1', 1" erzeugte Daten in eine Parametrisierung eines Anwendungsprogramms 41, 41', 41" einer Datenauswerteeinheit 4, 4', 4" zu konvertieren. So liest die Programmierschnittstelle 29 eine Eigenschaft 23 "Bezeichnung der Daten" der Ressource 25 einer Datenauswerteeinheit 4, 4', 4", um die von einer Datenerzeugereinheit 1, 1',1" erzeugten Daten gemäss dem Messparadigma des Anwendungsprogramms 41, 41', 41" dieser Datenauswerteeinheit 4, 4', 4" mit der gelesenen Eigenschaft 23 "Bezeichnung der Daten" zu bezeichnen. Oder die Programmierschnittstelle 29 liest eine Eigenschaft 23 "Format der Daten" der Ressource 25 einer Datenauswerteeinheit 4, 4', 4", um die von einer Datenerzeugereinheit 1, 1', 1" erzeugten Daten gemäss dem Messparadigma des Anwendungsprogramms 41, 41', 41" dieser Datenauswerteeinheit 4, 4', 4" mit der gelesenen Eigenschaft 23 "Format der Daten" zu formatieren.

In der Kommunikationsschicht 30 erfolgt die Kommunikation zwischen den Komponenten des Kommunikationssystems 2. Vorzugsweise erfolgt die Kommunikation zwischen den Komponenten in der Kommunikationsschicht 30 entweder per Messaging 26, Streaming 27 oder Bulk Upload 28. Messaging 26 und Streaming 27 werden von den Clienteinheiten 2.1, 2.1', 2.1" und den Clustereinheiten 2.4, 2.4', 2.4" vermittelt. Bulk Upload 28 wird von der Datenspeichereinheit 2.5 vermittelt.

Messaging 26 ist eine synchrone oder asynchrone Kommunikation, bei der eine anfragende Komponente eine Anfrage an die Adresse einer angefragten Komponente richtet und auf eine Antwort der angefragten Komponente an die Adresse der anfragenden Komponente wartet. Die Clienteinheiten 2.1, 2.1', 2.1" und die Clustereinheiten 2.4, 2.4', 2.4" vermitteln das Messaging 26. Vorzugsweise kommunizieren die Clienteinheiten 2.1, 2.1', 2.1" und die Clustereinheiten 2.4, 2.4', 2.4" beim Messaging 26 über TCP/IP als webfähiges Protokoll 31 miteinander. Für das Messaging 26 weist jede Clustereinheit 2.4, 2.4', 2.4" im physikalischen Datenspeicher einen Speicherbereich auf, in welchem Speicherbereich Anfragen mit der Adresse 22 der Ressource 25 einer angefragten Komponente und Antworten mit der Adresse 22 der Ressource 25 einer anfragenden Komponente zwischengespeichert sind. Für die Clustereinheit 2.4, 2.4', 2.4" sind im Speicherbereich zwischengespeicherte Anfragen und Antworten eineindeutig identifizierbar. Die Clustereinheit 2.4, 2.4', 2.4" kommuniziert eine Anfrage an die Adresse 22 der Ressource 25 der angefragten Komponente und die Clustereinheit 2.4, 2.4', 2.4" kommuniziert eine Antwort an die Adresse 22 der Ressource 25 der anfragenden Komponente.

Gemäss Fig. 1 findet zwischen der ersten Datenerzeugereinheit 1 und der ersten Datenauswerteeinheit 4 Messaging 26 statt. Die Datenübermittlung beim Messaging ist bidirektional. Dabei halten die erste Clustereinheit 2.4 und die erste Clienteinheit 2.1 einen ersten Kommunikationskanal 2.2 zwischen der ersten Datenerzeugungseinheit 1 und der ersten Datenauswerteeinheit 4 aufrecht.

Eine Übermittlungsrate ist beim Messaging 26 sehr gering. Vorzugsweise erfolgt beim Messaging 26 eine Statusermittlung, wie eine Statusbenachrichtigung oder eine Statusaktualisierung. Bei einer Statusbenachrichtigung fragt eine Datenauswerteeinheit 4, 4', 4" beispielsweise an, ob Daten für eine Datenübermittlung bereitsteht. Bei einer Statusaktualisierung antwortet eine Datenerzeugereinheit 1, 1, 1" beispielsweise, dass Daten für eine Datenübermittlung bereitstehen und wie der Wert der Ressource 25 "Übermittlungsart von Daten" dieser Datenerzeugereinheit 1, 1, 1" lautet. Beim Messaging 26 werden keine von der Datenerzeugungseinheit 1, 1', 1" erzeugte Daten an eine Datenauswerteeinheit 4, 4, 4" übermittelt, vielmehr wird durch das Messaging 26 eine Datenübermittlung vorbereitet, gestartet und beendet.

Eine Datenübermittlung erfolgt per Streaming 27 und/oder per Bulk Upload 28. Im Sinne der Erfindung bezeichnen die Konjunktionen "und" sowie "oder" logische Operatoren "UND" sowie "ODER". Vorzugsweise entscheidet eine Eigenschaft 23 über die "Übermittlungsart von Daten" einer Ressource 25, ob zu übermittelnde Daten per Streaming 27 und/oder per Bulk Upload 28 übermittelt werden. Die Eigenschaft 23 gibt als "Übermittlungsart von Daten" dann "Streaming" oder "Bulk Upload" oder "Streaming, Bulk Upload" an. Im Sinne der Erfindung bezeichnet "Streaming, Bulk Upload", dass die Datenübermittlung gleichzeitig per Streaming 27 und per Bulk Upload 28 erfolgt. Beispielsweise werden Daten so in zwei Auflösungsgraden gleichzeitig übermittelt, einmal werden Daten grob aufgelöst per Streaming 27 übermittelt, und einmal werden Daten fein aufgelöst per Bulk Upload 28 übertragen. Beispielsweise weist die grobe Auflösung der Daten zehnmal weniger Informationsgehalt als die feine Auflösung der Daten auf. Eine Datenauswerteeinheit 4, 4', 4" kann dann die Auswertung der übermittelten Daten mit grob aufgelösten Daten in Echtzeit beginnen und mit den zeitlich später fein aufgelösten Daten fortsetzen.

Es ist aber auch möglich, dass je nach Verfügbarkeit des Netzwerkes 3, für eine Eigenschaft 23 "Übermittlungsart von Daten" "Streaming, Bulk Upload" die Datenübermittlung entweder per Streaming 27 oder per Bulk Upload 28 erfolgt. Bei einer hohen Verfügbarkeit des Netzwerkes 3 erfolgt die Datenübermittlung dann per Streaming 27, bei einer tiefen Verfügbarkeit des Netzwerkes 3 erfolgt die Datenübermittlung dann per Bulk Upload 28. Eine Entscheidung, ob das Netzwerk 3 eine hohe Verfügbarkeit oder eine tiefe Verfügbarkeit hat, erfolgt situativ durch die jeweilige Clustereinheit 2.4, 2.4', 2.4'' und die jeweilige Clienteinheit 2.1, 2.1', 2.1'' des Kommunikationssystems 2.

Eine Datenauswerteeinheit 4, 4', 4" fragt per Messaging 26 über die Clustereinheit 2.4, 2.4', 2.4'' eine Clienteinheit 2.1, 2.1', 2.1'' mindestens einer Datenerzeugereinheit 1, 1', 1" an, ob Daten für eine Datenübermittlung an die anfragende Datenauswerteeinheit 4, 4', 4'' bereitstehen. Daraufhin antwortet die angefragte Clienteinheit 2.1, 2.1', 2.1'' der mindestens einen Datenerzeugereinheit 1, 1', 1", dass solche Daten für eine Datenübermittlung bereitstehen und dass die Eigenschaft 23 "Übermittlungsart von Daten" der Ressource 25 Datenerzeugereinheit 1, 1', 1" gleich "Streaming" oder "Bulk Upload" oder "Streaming, Bulk Upload" ist. Die Clustereinheit 2.4, 2.4', 2.4'' vermittelt diese Antwort an die anfragende Datenauswerteeinheit 4, 4', 4". Nun befiehlt die anfragende Datenauswerteeinheit 4, 4', 4" per Messaging 26 über die Clustereinheit 2.4, 2.4', 2.4'' eine Clienteinheit 2.1, 2.1', 2.1'' der mindestens einen antwortenden Datenerzeugereinheit 1, 1', 1" die Daten gemäss der Eigenschaft 23 "Übermittlungsart von Daten" an die anfragende Datenauswerteeinheit 4, 4', 4" zu übermitteln. Typischerweise vermittelt eine Clustereinheit 2.4, 2.4', 2.4'' zwischen einer grossen Anzahl Datenauswerteeinheiten 4, 4', 4" und einer grossen Anzahl Clienteinheiten 2.1, 2.1', 2.1'' von Datenerzeugereinheiten 1, 1', 1".

Das Streaming 27 ist eine synchrone Datenübermittlung zwischen zwei Komponenten des Kommunikationssystems 2. Die Clustereinheiten 2.4, 2.4', 2.4" und die Clienteinheiten 2.1, 2.1', 2.1" vermitteln das Streaming 27. Vorzugsweise kommunizieren die Clustereinheiten 2.4, 2.4', 2.4" und die Clienteinheiten 2.1, 2.1', 2.1" beim Streaming 27 über TCP/IP als webfähiges Protokoll 31 miteinander. Streaming 27 kann auch eine asynchrone Datenübermittlung sein.

Gemäss Fig. 1 findet zwischen einer zweiten Datenerzeugungseinheit 1' und einer zweiten Datenauswerteeinheit 4' Streaming 27 statt. Beim Streaming 27 halten die zweite Clustereinheit 2.4' und die zweite Clienteinheit 2.1' einen zweiten Kommunikationskanal 2.2' zwischen der zweiten Datenauswerteeinheit 4' und der zweiten Datenerzeugungseinheit 1' aufrecht. Für das Streaming 27 weist jede Clustereinheit 2.4, 2.4', 2.4" im physikalischen Datenspeicher einen Speicherbereich (Topic) auf, in welchem Speicherbereich zu übermittelnde Daten mit der Adresse 22 der Ressource 25 der zweiten Datenauswerteeinheit 4' zwischengespeichert sind. Für die Clustereinheit 2.4, 2.4', 2.4" sind im Speicherbereich zwischengespeicherte Daten eineindeutig identifizierbar. Die Clustereinheit 2.4, 2.4', 2.4" übermittelt von der zweiten Datenerzeugungseinheit 1' erzeugte Daten, welche erzeugten Daten im Speicherbereich zwischengespeichert sind an die Adresse 22 der Ressource 25 der zweiten Datenauswerteeinheit 4'.

Beim Streaming 27 werden Daten mit sehr grosser Übermittlungsrate übermittelt. Beim Streaming 27 erfolgt die Datenübermittlung in Echtzeit. Echtzeit im Sinne der Erfindung bedeutet, dass eine Zeitdauer für die Datenübermittlung so gering ist, dass für eine Auswertung der übermittelten Daten in der Datenauswerteeinheit 4, 4', 4" ständig möglich ist.

Bulk Upload 28 ist eine asynchrone Datenübermittlung zwischen zwei Komponenten des Kommunikationssystems 2. Bulk Upload 28 wird von den Clustereinheiten 2.4, 2.4', 2.4" und den Clienteinheiten 2.1, 2.1', 2.1" per Messaging 26 vorbereitet und eingerichtet. Wenn der Bulk Upload 28 vorbereitet und eingerichtet ist, wird er von der Datenspeichereinheit 2.5 vermittelt. Vorzugsweise kommunizieren die Clustereinheiten 2.4, 2.4', 2.4" und die Clienteinheiten 2.1, 2.1', 2.1" beim Bulk Upload 28 über HTTP als webfähiges Protokoll 31' miteinander. Gemäss HTTP wird ein Kommunikationskanal 2.2, 2.2', 2.2" nur für die Zeit einer Datenübermittlung geöffnet und danach wieder geschlossen, der Kommunikationskanal 2.2, 2.2', 2.2" wird also nicht aufrechterhalten.

Gemäss Fig. 1 findet zwischen einer dritten Datenauswerteeinheit 4" und einer dritten Datenerzeugungseinheit 1" Bulk Upload 28 statt. Beim Bulk Upload 28 wird ein dritter Kommunikationskanal 2.2" zwischen der dritten Datenauswerteeinheit 4" und der dritten Datenerzeugungseinheit 1" nicht aufrechterhalten. Beim Bulk Upload erfolgt die Datenübermittlung nicht in Echtzeit. Beim Bulk Upload 28 werden zu übermittelnde Daten bereits in der dritten Datenerzeugereinheit 1" gesammelt und gespeichert und dann als Bulk an die Datenspeichereinheit 2.5 übermittelt. Diese Daten werden mit der Adresse 22 der Ressource 25 der dritten Datenauswerteeinheit 4", an welche die Daten übermittelt werden sollen, in der Datenspeichereinheit 2.5 gespeichert. Von der Datenspeichereinheit 2.5 werden gespeicherten Daten dann an die Adresse 22 der Ressource 25 der dritten Datenauswerteeinheit 4" übermittelt. Der Bulk Upload 28 erfolgt auf Anfrage der dritten Clustereinheit 2.4" der dritten Datenauswerteeinheit 4", ob in der Datenspeichereinheit 2.5 mit der Adresse 22 der Ressource 25 der dritten Datenauswerteeinheit 4" Daten gespeichert sind, welche Daten daraufhin von der Datenübermittlungsvorrichtung 2 als Bulk Upload 28 an die Adresse 22 der Ressource 25 der dritten Datenauswerteeinheit 4" übermittelt werden.

Die in Fig. 1 beispielhaft gezeigten Übermittlungsarten lassen sich miteinander kombinieren. So können auch die zweite Clustereinheit 2.4' und die dritte Clustereinheit 2.4" ein eigenständiges Gehäuse wie die erste Clustereinheit 2.4 aufweisen.

### Bezugszeichenliste

- 1, 1, 1": Datenerzeugungseinheit
- 1.1, 1.1', 1.1": hardwarenahe Schnittstelle
- 2: Kommunikationssystem
- 2.1, 2.1', 2.1": Clienteinheit
- 2.2, 2.2', 2.2": Kommunikationskanal
- 2.3, 2.3', 2.3": webfähige Schnittstelle
- 2.4, 2.4', 2.4": Clustereinheit
- 2.5: Datenspeichereinheit
- 2.9, 2.9', 2.9": Programmierschnittstelleneinheit
- 3: nicht-proprietäres Netzwerk
- 4, 4', 4": Datenauswerteeinheit
- 10: Hardwareschicht
- 11, 11', 11": Hardwaretreiber
- 20: Hardwareabstraktionsschicht
- 21: Client Protokoll
- 22: Adresse
- 24: Cluster Protokoll
- 25: Ressource
- 26: Messaging
- 27: Streaming
- 28: Bulk Upload
- 29: Programmierschnittstelle
- 30: Kommunikationsschicht
- 31, 31': webfähiges Protokoll
- 40: Anwendungsschicht
- 41, 41', 41": Anwendungsprogramm

## Patentansprüche

1. Kommunikationssystem (2) zur Datenübermittlung zwischen einer Vielzahl von Datenerzeugereinheiten (1, 1', 1") und einer Vielzahl von räumlich in einer kürzesten Entfernung von mehr als 30 Metern entfernten Datenauswerteeinheiten (4, 4', 4"), welche Datenerzeugereinheiten (1, 1', 1") konfiguriert sind, Daten zu erzeugen, welches Kommunikationssystem (2) konfiguriert ist, von den Datenerzeugereinheiten (1, 1', 1") erzeugte Daten über ein nicht-proprietäres Netzwerk (3) zu übermitteln, und welche Datenauswerteeinheiten (4, 4', 4") konfiguriert sind, vom Kommunikationssystem (2) übermittelte Daten auszuwerten; wobei das Kommunikationssystem weiterhin die Eigenschaft aufweist, dass das Kommunikationssystem (2) eine Hardwareabstraktionsschicht (20) aufweist; dass die Hardwareabstraktionsschicht (20) konfiguriert ist, eine Datenauswerteeinheit (4, 4', 4") als Ressource (25) darzustellen; dass die Ressource (25) eine Eigenschaft (23) "Übermittlungsart von Daten" hat, welche Eigenschaft (23) "Übermittlungsart von Daten" "Streaming" oder "Bulk Upload" oder "Streaming, Bulk Upload" lautet; dass das Kommunikationssystem (2) konfiguriert ist, die Eigenschaft (23) "Übermittlungsart von Daten" zu lesen; dass das Kommunikationssystem (2) konfiguriert ist, die erzeugten Daten gemäss der gelesenen Eigenschaft (23) "Übermittlungsart von Daten" an die Datenauswerteeinheit (4, 4', 4") zu übermitteln; dass das Kommunikationssystem (2) mindestens eine Clienteinheit (2.1, 2.1', 2.1") aufweist, welche Clienteinheit (2.1, 2.1', 2.1") in einem gleichen Subnetzwerk hinter einem Router mindestens einer Datenerzeugereinheit (1, 1', 1") angeordnet ist; dass das Kommunikationssystem (2) mindestens eine Clustereinheit (2.4, 2.4', 2.4") aufweist, welche Clustereinheit (2.4, 2.4', 2.4") in einem gleichen Subnetzwerk hinter einem Router mindestens einer Datenauswerteeinheit (4, 4', 4") angeordnet ist; dass die Clienteinheit (2.1, 2.1', 2.1") und die Clustereinheit (2.4, 2.4', 2.4") konfiguriert sind, per Messaging (26) miteinander zu kommunizieren; dass die Hardwareabstraktionsschicht (20) konfiguriert ist, jede Datenerzeugereinheit (1, 1', 1") als Ressource (25) darzustellen; dass die Hardwareabstraktionsschicht (20) konfiguriert ist, jede Datenauswerteeinheit (4, 4', 4") als Ressource (25) darzustellen; dass jede Ressource (25) eine Adresse (22) hat, welche Adresse einen Namen der Ressource (25) eineindeutig festlegt; dass in der Clienteinheit (2.1, 2.1', 2.1") ein Client Protokoll (21) installiert ist; dass das Client Protokoll (21) konfiguriert ist, die Adresse (22) der Ressource (25) einer Datenerzeugereinheit (1, 1', 1") zu lesen, um eine Datenerzeugereinheit (1, 1', 1") eineindeutig mit einem Namen zu identifizieren; dass in der Clustereinheit (2.4, 2.4', 2.4") ein Cluster Protokoll (24) installiert ist; dass das Cluster Protokoll (24) konfiguriert ist, die Adresse (22) der Ressource (25) einer Datenauswerteeinheit (4, 4', 4") zu lesen, um eine Datenauswerteeinheit (4, 4', 4") eineindeutig mit einem Namen zu identifizieren; dass Messaging (26) eine synchrone Kommunikation mit Anfragen einer Datenerzeugereinheit (1, 1', 1") oder einer Datenauswerteeinheit (4, 4', 4") und Antworten einer Datenerzeugereinheit (1, 1', 1") oder einer Datenauswerteeinheit (4, 4', 4") ist; und dass die Clienteinheit (2.1, 2.1', 2.1") und die Clustereinheit (2.4, 2.4', 2.4") konfiguriert sind, beim Messaging (26) einen Kommunikationskanal (2.2, 2.2', 2.2") zwischen der anfragenden Datenerzeugungseinheit (1, 1', 1") oder Datenerzeugungseinheit (1, 1', 1") und der angefragten Datenerzeugungseinheit (1, 1', 1") oder Datenauswerteeinheit (4, 4', 4") aufrechtzuhalten.

2. Kommunikationssystem (2) nach Anspruch 1, **dadurch gekennzeichnet, dass** die Hardwareabstraktionsschicht (20) konfiguriert ist, die von einer Datenauswerteeinheit (4, 4', 4") geforderte Übermittlungsart von Daten vor der Datenübermittlung durch das Kommunikationssystem (2) als Eigenschaft (23) "Übermittlungsart von Daten" zu speichern.

3. Kommunikationssystem (2) nach Anspruch 1, **dadurch gekennzeichnet, dass** falls die gelesene Eigenschaft (23) "Übermittlungsart von Daten" gleich "Streaming" lautet, das Kommunikationssystem (2) konfiguriert ist, die erzeugten Daten per Streaming (27) an die Datenauswerteeinheit (4, 4' 4") zu übermitteln; dass falls die gelesene Eigenschaft (23) "Übermittlungsart von Daten" gleich "Bulk Upload" lautet, das Kommunikationssystem (2) konfiguriert ist, die erzeugten Daten per Bulk Upload (28) an die Datenauswerteeinheit (4, 4', 4") zu übermitteln; und dass falls die gelesene Eigenschaft (23) "Übermittlungsart von Daten" gleich "Streaming, Bulk Upload" lautet, das Kommunikationssystem (2) konfiguriert ist, die erzeugten Daten gleichzeitig per Streaming (27) und Bulk Upload (28) an die Datenauswerteeinheit (4, 4', 4") zu übermitteln.

4. Kommunikationssystem (2) nach Anspruch 1, **dadurch gekennzeichnet, dass** falls die gelesene Eigenschaft (23) "Übermittlungsart von Daten" gleich "Streaming, Bulk Upload" lautet, und falls die Clustereinheit (2.4, 2.4', 2.4") und die Clienteinheit (2.1, 2.1', 2.1") eine Verfügbarkeit des Netzwerkes (3) als hoch einstufen, das Kommunikationssystem (2) konfiguriert ist, die erzeugten Daten per Streaming (27) an die Datenauswerteeinheit (4, 4', 4")zu übermitteln; oder dass falls die gelesene Eigenschaft (23) "Übermittlungsart von Daten" gleich "Streaming, Bulk Upload" lautet, und falls die Clustereinheit (2.4, 2.4', 2.4") und die Clienteinheit (2.1, 2.1', 2.1") eine Verfügbarkeit des Netzwerkes (3) als tief einstufen, das Kommunikationssystem (2) konfiguriert ist, die erzeugten Daten per Bulk Upload (28) an die Datenauswerteeinheit (4, 4', 4") zu übermitteln.

5. Kommunikationssystem (2) nach Anspruch 1, **dadurch gekennzeichnet, dass** jede Clustereinheit (2.4, 2.4', 2.4") einen physikalischen Datenspeicher mit mindestens einem Speicherbereich aufweist, in welchem Speicherbereich jede Anfrage mit der Adresse (22) der Ressource (25) der angefragten Datenerzeugereinheit (1, 1',1") oder Datenauswerteeinheit (4, 4', 4") und jede Antwort mit der Adresse (22) der Ressource (25) der anfragenden Datenerzeugereinheit (1, 1',1") oder Datenauswerteeinheit (4, 4', 4") zwischengespeichert sind; dass die Clustereinheit (2.4, 2.4', 2.4") konfiguriert ist, eine zwischengespeicherte Anfrage an die Adresse (22) der Ressource (25) der angefragten Datenerzeugereinheit (1, 1',1") oder Datenauswerteeinheit (4, 4', 4") zu kommunizieren; und dass die Clustereinheit (2.4, 2.4', 2.4") konfiguriert ist, eine zwischengespeicherte Antwort an die Adresse (22) der anfragenden Datenerzeugereinheit (1, 1',1") oder Datenauswerteeinheit (4, 4', 4") zu kommunizieren.

6. Kommunikationssystem (2) nach einem der Ansprüche 1 bis 5, **dadurch gekennzeichnet, dass** Streaming (27) eine synchrone Datenübermittlung von einer Datenerzeugereinheit (1, 1',1") zu einer Datenauswerteeinheit (4, 4', 4") ist; und dass die Clienteinheit (2.1, 2.1', 2.1") und die Clustereinheit (2.4, 2.4', 2.4") konfiguriert sind, beim Streaming (27) einen Kommunikationskanal (2.2, 2.2', 2.2") zwischen der Datenerzeugungseinheit (1, 1',1") und der Datenauswerteeinheit (4, 4', 4") aufrechtzuhalten.

7. Kommunikationssystem (2) nach Anspruch 6, **dadurch gekennzeichnet, dass** jede Clustereinheit (2.4, 2.4', 2.4") einen physikalischen Datenspeicher mit mindestens einem Speicherbereich aufweist, in welchem Speicherbereich von der Datenerzeugereinheit (1, 1', 1") erzeugte Daten mit der Adresse (22) der Ressource (25) der Datenauswerteeinheit (4, 4', 4") zwischengespeichert sind; und dass die Clustereinheit (2.4, 2.4', 2.4") konfiguriert ist, zwischengespeicherte Daten an die Adresse (22) der Ressource (25) der Datenauswerteeinheit (4, 4', 4") zu übermitteln.

8. Kommunikationssystem (2) nach einem der Ansprüche 1 bis 7, **dadurch gekennzeichnet, dass** Bulk Upload (28) eine asynchrone Datenübermittlung von einer Datenerzeugereinheit (1, 1', 1") zu einer Datenauswerteeinheit (4, 4', 4") ist; und dass die Clienteinheit (2.1, 2.1', 2.1") und die Clustereinheit (2.4, 2.4', 2.4") konfiguriert sind, beim Bulk Upload (28) einen Kommunikationskanal (2.2, 2.2', 2.2") zwischen der Datenerzeugungseinheit (1, 1', 1") und der Datenauswerteeinheit (4, 4', 4") nicht aufrechtzuhalten.

9. Kommunikationssystem (2) nach Anspruch 8, **dadurch gekennzeichnet, dass** das Kommunikationssystem (2) mindestens eine Datenspeichereinheit (2.5) mit einem physikalischen Datenspeicher aufweist, in welchem physikalischen Datenspeicher von der Datenerzeugereinheit (1, 1', 1") erzeugte Daten mit der Adresse (22) der Ressource (25) der Datenauswerteeinheit (4, 4', 4") gespeichert sind; und dass die Clustereinheit (2.4, 2.4', 2.4") konfiguriert ist, gespeicherte Daten an die Adresse (22) der Ressource (25) der Datenauswerteeinheit (4, 4', 4") zu übermitteln.

10. Kommunikationssystem (2) nach einem der Ansprüche 1 bis 9, **dadurch gekennzeichnet, dass** die Hardwareabstraktionsschicht (20) eine Programmierschnittstelle (29) aufweist; dass die Programmierschnittstelle (29) konfiguriert ist, eine Eigenschaft (23) der Ressource (25) einer Datenauswerteeinheit (4, 4', 4") zu verwenden, um von einer Datenerzeugereinheit (1, 1',1") erzeugte Daten in eine Parametrisierung eines Anwendungsprogramms (41, 41', 41") der Ressource (25) einer Datenauswerteeinheit (4, 4", 4") zu konvertieren.

11. Kommunikationssystem (2) nach Anspruch 10, **dadurch gekennzeichnet, dass** die Ressource (25) eine Eigenschaft (23) "Bezeichnung der Daten" hat; dass die Programmierschnittstelle (29) konfiguriert ist, die Eigenschaft (23) "Bezeichnung der Daten" der Ressource (25) zu lesen; und dass die Programmierschnittstelle (29) konfiguriert ist, von einer Datenerzeugereinheit (1, 1', 1") erzeugte Daten gemäss der gelesenen Eigenschaft (23) "Bezeichnung der Daten" zu bezeichnen.

12. Kommunikationssystem (2) nach einem der Ansprüche 10 oder 11, **dadurch gekennzeichnet, dass** die Ressource (25) eine Eigenschaft (23) "Format der Daten" hat; dass die Programmierschnittstelle (29) konfiguriert ist, die Eigenschaft (23) "Format der Daten" der Ressource (25) zu lesen; und dass die Programmierschnittstelle (29) konfiguriert ist, von einer Datenerzeugereinheit (1, 1', 1") erzeugte Daten gemäss der gelesenen Eigenschaft (23) "Format der Daten" zu formatieren.

## Claims

1. A communication system (2) for data transmission between a variety of data generation units (1, 1', 1") and a variety of data evaluation units (4, 4', 4") physically separated therefrom within a shortest distance of more than 30 meters, which data generation units (1, 1', 1") is configured to generate data, which communication system (2) is configured to transmit data generated by the data generation units (1, 1', 1") via a non-proprietary network (3), and which data evaluation units (4, 4', 4') are configured to evaluate data transmitted by the communication system (2); wherein the communication system comprises the further characteristics, that the communication system (2) comprises a hardware abstraction layer (20); said hardware abstraction layer (20) being configured to represent a data evaluation unit (4, 4', 4") as a resource (25); wherein the resource (25) comprises a property (23) "data transmission type", which property (23) "data transmission type" is "Streaming" or "Bulk Upload" or "Streaming, Bulk Upload"; the communication system (2) being configured to read the property (23) "data transmission type"; the communication system (2) being configured to transmit the data generated to the data evaluation unit (4, 4', 4") in accordance with the read characteristic (23) "data transmission type"; wherein the communication system (2) comprises at least one client unit (2.1, 2.1', 2.1"), which client unit (2.1, 2.1', 2.1") is arranged in the same subnetwork behind a router to least one data generation unit (1, 1', 1"); the communication system (2) comprises at least one cluster unit (2.4, 2.4', 2.4"), which cluster unit (2.4, 2.4', 2.4") is arranged in the same subnetwork behind a router to at least one data evaluation unit (4, 4', 4") ; in that the client unit (2.1, 2.1', 2.1") and the cluster unit (2.4, 2.4', 2.4") being configured to communicate with each other by messaging (26); in that the hardware abstraction layer (20) being configured to represent each data generation unit (1, 1', 1") as a resource (25); the hardware abstraction layer (20) being configured to represent each data evaluation unit (4, 4', 4") as a resource (25); each resource (25) having an address (22) which address biuniquely designates a name of the resource (25); a client protocol (21) is installed in the client unit (2.1, 2.1', 2.1"); the client protocol (21) being configured to read the address (22) of the resource (25) of a data generation unit (1, 1', 1") to biuniquely identify a data generation unit (1, 1', 1") by a name; a cluster protocol (24) is installed in the cluster unit (2.4, 2.4', 2.4"); the cluster protocol (24) being configured to read the address (22) of the resource (25) of a data evaluation unit (4, 4', 4") to biuniquely identify a data evaluation unit (4, 4', 4") by a name; in that messaging (26) is synchronous communication including requests of a data generation unit (1, 1', 1") or a data evaluation unit (4, 4', 4") and responses of a data generation unit (1, 1', 1") or a data evaluation unit (4, 4', 4"); and in that during messaging (26) the client unit (2.1, 2.1', 2.1") and the cluster unit (2.4, 2.4', 2.4") being configured to maintain a communication channel (2.2, 2.2', 2.2") between the requesting data generation unit (1, 1', 1") or data generation unit (1, 1', 1") and the requested data generation unit (1, 1', 1") or data evaluation unit (4, 4', 4").

2. The communication system (2) according to claim 1, **characterized in that** the hardware abstraction layer (20) being configured to store the data transmission type required by a data evaluation unit (4, 4', 4") as a property (23) "data transmission type" prior to data transfer by the communication system (2).

3. The communication system (2) according to claim 1, **characterized in that** if the read property (23) "data transmission type" corresponds to "Streaming", the communication system (2) being configured to transmit the data generated to the data evaluation unit (4, 4', 4") by streaming (27); if the read property (23) "data transmission type" is "Bulk Upload", the communication system (2) being configured to transmit the generated data to the data evaluation unit (4, 4', 4") by bulk upload (28); and if the read characteristic (23) "data transmission type" is "Streaming, Bulk Upload", the communication system (2) being configured to transmit the generated data to the data evaluation unit (4, 4', 4") simultaneously by streaming (27) and bulk upload (28).

4. The communication system (2) according to claim 1, **characterized in that** if the read property (23) "data transmission type" is "Streaming, Bulk Upload" and if the cluster unit (2.4, 2.4', 2.4") and the client unit (2.1, 2.1', 2.1") classify an availability of the network (3) as high, the communication system (2) is configured to transmit the data generated to the data evaluation unit (4, 4', 4") by streaming (27); or if the read property (23) "data transmission type" is "Streaming, Bulk Upload" and if the cluster unit (2.4, 2.4', 2.4") and the client unit (2.1, 2.1', 2.1") classify an availability of the network (3) as low, the communication system (2) is configured to transmit the data generated to the data evaluation unit (4, 4', 4") by bulk uploading (28).

5. The communication system (2) according to claim 1, **characterized in that** each cluster unit (2.4, 2.4', 2.4") comprises a physical data storage device comprising at least one memory area, in which memory area is cached each request together with the address (22) of the resource (25) of the requested data generation unit (1, 1', 1") or data evaluation unit (4, 4', 4"), and every response together with the address (22) of the resource (25) of the requesting data generation unit (1, 1', 1") or data evaluation unit (4, 4', 4"); the cluster unit (2.4, 2.4', 2.4") being configured to communicate a cached request to the address (22) of the resource (25) of the requested data generation unit (1, 1', 1") or data evaluation unit (4, 4', 4"); and the cluster unit (2.4, 2.4', 2.4") being configured to communicate a cached response to the address (22) of the requesting data generation unit (1, 1', 1") or data evaluation unit (4, 4', 4").

6. The communication system (2) according to any of claims 1 to 5, **characterized in that** streaming (27) is synchronous data transmission from a data generation unit (1, 1', 1") to a data evaluation unit (4, 4', 4"); and **in that** during streaming (27) the client unit (2.1, 2.1', 2.1") and the cluster unit (2.4, 2.4', 2.4") being configured to maintain a communication channel (2.2, 2.2', 2.2") between the data generation unit (1, 1', 1") and the data evaluation unit (4, 4", 4").

7. The communication system (2) according to claim 6, **characterized in that** each cluster unit (2.4, 2.4', 2.4") comprises a physical data storage device comprising at least one memory area, in which memory area are cached data generated by the data generation unit (1, 1', 1") together with the address (22) of the resource (25) of the data evaluation unit (4, 4', 4"); and the cluster unit (2.4, 2.4', 2.4") being configured to transmit cached data to the address (22) of the resource (25) of the data evaluation unit (4, 4", 4").

8. The communication system (2) according to any of claims 6 to 7, **characterized in that** bulk upload (28) is asynchronous data transmission from a data generation unit (1, 1', 1") to a data evaluation unit (4, 4', 4"); and during bulk upload (28) the client unit (2.1, 2.1', 2.1") and the cluster unit (2.4, 2.4', 2.4") being configured to not maintain a communication channel (2.2, 2.2', 2.2") between the data generation unit (1 , 1', 1") and the data evaluation unit (4, 4", 4").

9. The communication system (2) according to claim 8, **characterized in that** the communication system (2) comprises at least one data storage unit (2.5) comprising a physical data storage device, in which physical data storage device is stored data generated by the data generation unit (1, 1', 1") together with the address (22) of the resource (25) of the data evaluation unit (4, 4', 4"); and **in that** the cluster unit (2.4, 2.4', 2.4") being configured to transmit stored data to the address (22) of the resource (25) of the data evaluation unit (4, 4', 4").

10. The communication system (2) according to any of claims 1 to 9, **characterized in that** the hardware abstraction layer (20) comprises a programming interface (29); wherein said programming interface (29) being configured to use a property (23) of the resource (25) of a data evaluation unit (4, 4', 4") to convert data generated by a data generation unit (1, 1', 1") into a parameterization of a application program (41, 41', 41") of the resource (25) of a data evaluation unit (4, 4', 4").

11. The communication system (2) according to claim 10, **characterized in that** the resource (25) has a property (23) "data description"; the programming interface (29) being configured to read the property (23) "data description" of the resource (25); and the programming interface (29) being configured to designate data generated by a data generation unit (1, 1', 1") according to the read property (23) "data description".

12. The communication system (2) according to any of claims 10 or 11, **characterized in that** the resource (25) has a property (23) "data format"; the programming interface (29) being configured to read the property (23) "data format" of the resource (25); and the programming interface (29) being configured to format data generated by a data generation unit (1, 1', 1") according to the read property (23) "data format".

## Revendications

1. Système de communication (2) pour la transmission de données entre une pluralité d'unités de génération de données (1, 1', 1") et une pluralité d'unités d'évaluation de données (4, 4', 4") éloignées spatialement à une distance la plus courte de plus de 30 mètres, lesdites unités de génération de données (1, 1', 1") étant configurées pour générer des données, ledit système de communication (2) étant configuré pour transmettre les données générées par les unités de génération de données (1, 1', 1") sur un réseau non propriétaire (3), et lesdites unités d'évaluation de données (4, 4', 4") étant configurées pour évaluer les données transmises par le système de communication (2); dans lequel ledit système de communication (2) présente en outre la caractéristique que le système de communication (2) comprend une couche d'abstraction matérielle (20); ladite couche d'abstraction matérielle (20) est configurée pour représenter une unité d'évaluation de données (4, 4', 4") en tant que ressource (25); ladite ressource (25) présente une caractéristique (23) «type de transmission de données», laquelle caractéristique (23) «type de transmission de données» étant «diffusion en temps réel» (streaming en anglais) ou «transfert groupé» (bulk upload en anglais) ou «diffusion en temps réel, transfert groupé»; ledit système de communication (2) est configuré pour lire la caractéristique (23) «type de transmission de données"; le système de communication (2) est configuré pour transmettre les données générées à l'unité d'évaluation de données (4, 4', 4") selon la caractéristique (23) «type de transmission de données» lue, le système de communication (2) comprend au moins une unité client (2.1, 2.1', 2.1"), laquelle unité client (2.1, 2.1', 2,1") est disposée dans un même sous-réseau derrière un routeur d'au moins une unité de génération de données (1, 1', 1"); le système de communication (2) comprend au moins une unité cluster (2.4, 2.4', 2.4"), laquelle unité cluster (2.4, 2.4', 2.4") est disposée dans un même sous-réseau derrière un routeur d'au moins une unité d'évaluation de données (4, 4', 4"); l'unité client (2.1, 2.1', 2.1") et l'unité cluster (2.4, 2.4', 2.4") sont configurées pour communiquer entre elles par messagerie (26); la couche d'abstraction matérielle (20) est configurée pour représenter chaque unité de génération de données (1, 1', 1") en tant que ressource (25); la couche d'abstraction matérielle (20) est configurée pour représenter chaque unité d'évaluation de données (4, 4', 4") en tant que ressource (25); chaque ressource (25) possède une adresse (22); laquelle adresse définit biunivoquement un nom de la ressource (25); un protocole client (21) est installé dans l'unité client (2.1, 2.1', 2.1"); ledit protocole client (21) est configuré pour lire l'adresse (22) de l'unité de génération de données (1, 1', 1") pour identifier biunivoquement une unité de génération de données (1, 1', 1") par un nom; un protocole cluster (24) est installé dans l'unité cluster (2.4, 2.4', 2.4"); ledit protocole cluster (24) est configuré pour lire l'adresse (22) de la ressource (25) d'une unité d'évaluation de données (4, 4', 4") pour identifier biunivoquement une unité d'évaluation de données (4, 4', 4") par un nom; ladite messagerie (26) est une communication synchrone avec demandes d'une unité de génération de données (1, 1', 1") ou d'une unité d'évaluation de données (4, 4', 4") et réponses d'une unité de génération de données (1, 1', 1") ou d'une unité d'évaluation de données (4, 4', 4"); et ladite unité client (2.1, 2.1', 2.1") et ladite unité cluster (2.4, 2.4', 2.4") sont configurées pour maintenir un canal de communication (2.2, 2.2', 2.2") pour la messagerie (26) entre l'unité de génération de données (1, 1', 1") ou l'unité d'évaluation de données (4, 4', 4") demandeuses et l'unité de génération de données (1, 1', 1") ou l'unité d'évaluation de données (4, 4', 4") destinataires.

2. Système de communication (2) selon la revendication 1, **caractérisé en ce que** la couche d'abstraction matérielle (20) est configurée pour stocker le type de transmission de données requis par une unité d'évaluation de données (4, 4', 4") en tant que caractéristique (23) «type de transmission de données» avant le transfert de données par le système de communication (2).

3. Système de communication (2) selon la revendication 1, **caractérisé en ce que** si la caractéristique (23) «type de transmission de données» lue correspond à «diffusion en temps réel», le système de communication (2) est configuré pour transmettre les données générées par diffusion en temps réel (27) à l'unité d'évaluation de données (4, 4', 4"); si la caractéristique (23) «type de transmission de données» lue correspond à «transfert groupé», le système de communication (2) est configuré pour transmettre les données générées par transfert groupé (28) à l'unité d'évaluation des données (4, 4', 4"); et si la caractéristique (23) «type de transmission de données» lue correspond à «diffusion en temps réel, transfert groupé», le système de communication (2) est configuré pour transmettre les données générées simultanément par diffusion en temps réel (27) et par transfert groupé (28) à l'unité d'évaluation de données (4, 4', 4").

4. Système de communication (2) selon la revendication 1, **caractérisé en ce que** si la caractéristique (23) «type de transmission de données» lue correspond à «diffusion en temps réel, transfert groupé» et si une disponibilité du réseau (3) selon le classement de l'unité client (2.1, 2.1', 2.1") et de l'unité cluster (2.4, 2.4', 2.4") est élevée, le système de communication (2) est configuré pour transmettre les données générées par diffusion en temps réel (27) à l'unité d'évaluation de données (4, 4', 4") ou, si la caractéristique (23) «type de transmission de données» lue correspond à «diffusion en temps réel, transfert groupé» et si la disponibilité du réseau (3) selon le classement de l'unité client (2.1, 2.1', 2.1") et de l'unité cluster (2.4, 2.4', 2.4") est faible, le système de communication (2) est configuré pour transmettre les données générées par transfert groupé (28) à l'unité d'évaluation de données (4, 4', 4").

5. Système de communication (2) selon la revendication 1, **caractérisé en ce que** chaque unité cluster (2.4, 2.4', 2.4") comprend un mémoire de données physique comprenant au moins une zone mémoire, dans laquelle zone mémoire sont mises en cache chaque demande avec l'adresse (22) de la ressource (25) de l'unité de génération de données (1, 1', 1") ou de l'unité d'évaluation de données (4, 4', 4") destinataires et chaque réponse avec l'adresse (22) de la ressource (25) de l'unité de génération de données (1, 1', 1") ou de l'unité d'évaluation de données (4, 4', 4") demandeuses; l'unité cluster (2.4, 2.4', 2.4") est configurée pour communiquer une demande mise en cache à l'adresse (22) de la ressource (25) de l'unité de génération de données (1, 1', 1") ou de l'unité d'évaluation de données (4, 4', 4") destinataires; et **en ce que** l'unité cluster (2.4, 2.4', 2.4") est configurée pour communiquer une réponse mise en cache à l'adresse (22) de l'unité de génération de données (1, 1', 1") ou de l'unité d'évaluation de données (4, 4', 4") demandeuses.

6. Système de communication (2) selon l'une quelconque des revendications 1 à 5, **caractérisé en ce que** le diffusion en temps réel (27) est une transmission de données synchrone d'une unité de génération de données (1, 1', 1") vers une unité d'évaluation de données (4, 4', 4"); et **en ce que** pendant le diffusion en temps réel (27), l'unité client (2,1, 2,1', 2,1") et l'unité cluster (2,4, 2,4', 2,4") maintiennent un canal de communication (2,2, 2,2', 2,2") entre l'unité de génération de données (1, 1', 1") et l'unité d'évaluation de données (4, 4', 4").

7. Système de communication (2) selon la revendication 6, **caractérisé en ce que** chaque unité cluster (2.4, 2.4', 2.4") comprend un mémoire de données physique comprenant au moins une zone mémoire, dans laquelle zone mémoire sont mises en cache les données générées par l'unité de génération de données (1, 1', 1") avec l'adresse (22) de la ressource (25) de l'unité d'évaluation de données (4, 4', 4"); et **en ce que** l'unité cluster (2.4, 2.4', 2.4") est configurée pour transmettre les données mises en cache à l'adresse (22) de la ressource (25) de l'unité d'évaluation des données (4, 4', 4").

8. Système de communication (2) selon l'une quelconque des revendications 1 à 7, **caractérisé en ce que** le transfert groupé (28) est une transmission de données asynchrone d'une unité de génération de données (1, 1', 1") vers une unité d'évaluation de données (4, 4', 4"); et **en ce que** pendant le transfert groupé (28) l'unité client (2.1, 2.1', 2.1") et l'unité cluster (2.4, 2.4', 2.4") sont configurées pour ne pas maintenir un canal de communication (2.2, 2.2', 2.2") entre l'unité de génération de données (1, 1', 1") et l'unité d'évaluation de données (4, 4', 4").

9. Système de communication (2) selon la revendication 8, **caractérisé en ce que** ledit système de communication (2) comprend au moins une unité de mémoire de données (2.5) comprenant un mémoire de données physique, dans lequel mémoire de données physique sont stockées des données générées par l'unité de génération de données (1, 1', 1") avec l'adresse (22) de la ressource (25) de l'unité d'évaluation de données (4, 4', 4"); et **en ce que** l'unité cluster (2.4, 2.4', 2.4") est configurée pour transmettre les données stockées à l'adresse (22) de la ressource (25) de l'unité d'évaluation des données (4, 4', 4").

10. Système de communication (2) selon l'une quelconque des revendications 1 à 9, **caractérisé en ce que** la couche d'abstraction matérielle (20) comprend une interface de programmation (29); **en ce que** ladite interface de programmation (29) est configurée pour utiliser une caractéristique (23) de la ressource (25) d'une unité d'évaluation de données (4, 4', 4") pour convertir des données générées par une unité de génération de données (1, 1', 1") dans un paramétrage d'un programme d'application (41, 41', 41") de la ressource (25) d'une unité d'évaluation de données (4, 4', 4").

11. Système de communication (2) selon la revendication 10, **caractérisé en ce que** la ressource (25) possède une caractéristique (23) «désignation de données»; l'interface de programmation (29) est configurée pour lire la caractéristique (23) «désignation de données» de la ressource (25); et l'interface de programmation (29) est configurée pour désigner les données générées par une unité de génération de données (1, 1', 1") selon la caractéristique (23) «désignation des données» lue.

12. Système de communication (2) selon l'une quelconque des revendications 10 ou 11, **caractérisé en ce que** la ressource (25) possède une caractéristique (23) «format de données»; l'interface de programmation (29) est configurée pour lire la caractéristique (23) «format de données» de la ressource (25); et **en ce que** l'interface de programmation est configurée pour formater les données générées par une unité de génération de données (1, 1', 1") selon la caractéristique (23) «format de données» lue.
